# FASCICULE DE BREVET EUROPEEN

(11) **EP 3 087 039 B1**
(45) Date de publication et mention de la délivrance du brevet: **03.10.2018**
(21) Numéro de dépôt: 14830988.3
(22) Date de dépôt: 19.12.2014
(51) Int. Cl.: C03B 5/235, C03B 5/237, C03B 7/06

(54) **PROCÉDÉ POUR LA FABRICATION D'OUVRAGES DE VERRE**
VERFAHREN ZUR HERSTELLUNG VON GLASELEMENTEN
PROCESS FOR THE MANUFACTURE OF GLASS ELEMENTS

(30) Priorité: 23.12.2013 FR 1363493
(43) Date de publication de la demande: 02.11.2016
(73) Titulaire: L'Air Liquide Société Anonyme pour l'Etude et l'Exploitation des Procédés Georges Claude, 75007 Paris (FR)
(72) Inventeur: JARRY, Luc, F-61270 Beaufai (FR); JOUMANI, Youssef, F-78121 Crespieres (FR); LEROUX, Bertrand, F-91650 Breuillet (FR); TSIAVA, Rémi, F-91250 Saint Germain-les-Corbeil (FR)
(74) Mandataire: De Vleeschauwer, Natalie Y.L.D.
(86) Numéro de dépôt international: PCT/FR2014/053464
(87) Numéro de publication internationale: WO 2015/097381

(56) Documents cités:
- EP-A1- 2 551 243
- WO-A1-2012/150176
- JP-A- 2003 286 032
- US-A1- 2010 162 772

## Description

La présente invention concerne un procédé pour la fabrication d'ouvrages de verre.

La fabrication d'ouvrages de verre, c'est-à-dire des articles façonnés, à partir de verre fondu, comporte plusieurs étapes.

De la matière vitrifiable solide est d'abord fondue dans une chambre de fusion. Le verre fondu est ensuite transporté vers une installation de formage (ou installation de mise en forme) au moyen d'un canal de distribution, généralement appelé « feeder » (aussi « forehearth » en anglais). Dans l'installation de formage, le verre fondu est façonné ou mis en forme de manière à réaliser des articles façonnés en verre.

La fusion de la matière vitrifiable nécessite un apport important d'énergie thermique dans la chambre de fusion, notamment par la combustion, dans la chambre de fusion, d'un combustible avec un comburant, l'air étant le comburant le plus souvent utilisé.

Afin de réaliser une tirée suffisante du four, une fusion rapide de la matière vitrifiable est nécessaire ce qui, à son tour, nécessite une chauffe intense de la matière solide.

Il est connu d'intensifier la chauffe de la matière vitrifiable et d'accélérer sa fusion en utilisant de l'oxygène en tant que comburant au lieu de l'air. En effet, l'oxycombustion permet de réaliser des flammes plus denses en énergie que celles obtenues par aérocombustion.

De tels procédés de fusion de verre au moyen d'oxycombustion sont notamment décrits dans WO2006/061530 et EP2176178.

Dans le canal de distribution, le verre fondu est amené de sa température à la sortie de la chambre de fusion à la température de façonnage ou température de formage, la température de façonnage étant généralement inférieure à la température à laquelle le verre fondu sort de la chambre de fusion.

La température optimale de façonnage est déterminée en fonction de la composition du verre et du procédé de formage.

Afin d'assurer la qualité des articles façonnés, il est important d'assurer que la température du verre fondu à la sortie du canal de distribution correspond à la température optimale de façonnage (avec une marge de quelques degrés Celsius seulement en fonction du procédé de façonnage) et qu'elle soit pratiquement uniforme sur la largeur du canal de distribution, et ceci malgré le refroidissement du verre fondu au niveau des parois réfractaires du canal. Pour cela, il est connu d'utiliser un grand nombre de brûleurs montés tout au long du cheminement du verre fondu dans le canal de distribution. Lesdits brûleurs fonctionnent de préférence avec un comburant peu concentré en oxygène, comme de l'air, afin de créer une flamme diffuse sans pic de température trop prononcé.

De tels procédés pour le chauffage d'un canal de distribution sont notamment décrits dans WO2004/101453.

Il est connu de US-A-2010/0162772 de produire des fibres de verre à résistance mécanique élevée par la fusion d'une matière vitrifiable de composition spécifique dans un four de fusion. Au moins une partie des surfaces du four de fusion en contact avec le verre est couverte d'un revêtement en substance dépourvu de métal noble. Le verre fondu est ensuite transporté du four de fusion de verre vers une filière au moyen d'un canal de distribution dont au moins une partie des surfaces en contact avec le verre est couverte d'un revêtement également en substance dépourvu de métal noble. Le verre fondu issu du canal de distribution est fourni à la filière à une température entre 2400°C et 2900°C et à une viscosité prédéterminée pour en former des fibres de verre continues. Le four de fusion peut être chauffé par des brûleurs à oxycombustion, par des brûleurs à aérocombustion ou par d'autres moyens. Le canal de distribution peut être chauffé au moyen de brûleurs à oxycombustion ou au moyen de brûleurs à aérocombustion.

De JP-A-2003-286032 il est connu de fabriquer des ouvrages de verre dans une installation comportant :
- un four de fusion chauffé au moyen de brûleurs dans lequel de la matière vitrifiable est fondu,
- une chambre d'affinage, également chauffée au moyen de brûleurs, pour l'affinage du verre fondu issu du four de fusion,
- un canal de distribution chauffé au moyen de brûleurs dans lequel le verre fondu issu de la chambre d'affinage est amené à sa température de façonnage, ainsi que
- une installation de formage du verre.
L'air est le seul comburant mentionné.
Dans un dernier four aval, les ouvrages de verre issus de l'installation de formage sont refroidis lentement. Le four aval est chauffé au moyen d'injecteurs d'air chaud. L'installation suivant JP-A-2003-286032 est munie de moyens pour la récupération de chaleur des fumées évacuées de la chambre d'affinage et/ou du canal de distribution. La chaleur récupérée des fumées évacuées de la chambre d'affinage peut notamment être utilisée pour chauffer l'air injecté dans le four aval et la chaleur récupérée des fumées évacuées du canal de distribution peut être utilisée pour préchauffer l'air de combustion utilisé dans la chambre d'affinage.

La présente invention concerne un procédé optimisé pour la fabrication d'articles façonnés en verre, plus particulièrement en ce qui concerne la consommation d'énergie.

La présente invention concerne un procédé de fabrication d'ouvrages de verre comportant les étapes habituelles de fusion, de transport et de façonnage.

Ainsi, suivant l'invention, on fond d'abord de la matière vitrifiable dans une chambre de fusion de manière à obtenir du verre fondu. On transporte ensuite le verre fondu de la chambre de fusion vers une installation de formage au moyen d'un canal de distribution de verre. Dans l'installation de formage, on réalise la mise en forme d'ouvrages de verre à partir du verre fondu issu du canal de distribution. Ladite mise en forme peut être réalisée par moulage ou pressage, par soufflage ou par une combinaison desdites méthodes, ou par tout autre procédé de façonnage à partir de verre fondu.

Dans la chambre de fusion, on brûle un premier combustible avec un premier comburant de manière à générer de la chaleur et un premier flux de fumées chaudes dans la chambre de fusion, l'apport de chaleur étant nécessaire pour la fusion de la matière vitrifiable. La combustion du premier combustible peut être la seule source de chaleur dans la chambre de fusion ou peut être combinée avec d'autres sources de chaleur. Le premier flux de fumées chaudes est évacué de la chambre de fusion, ce premier flux comportant de la chaleur résiduelle.

Dans le canal de distribution, on brûle un deuxième combustible avec un deuxième comburant de manière à générer, dans le canal de distribution, de la chaleur et un deuxième flux de fumées. La combustion du deuxième combustible peut être la seule source de chaleur dans le canal de distribution ou peut être combinée avec d'autres sources de chaleur. Au moyen de cet apport de chaleur dans le canal de distribution, le verre fondu est amené, de manière contrôlée, à sa température de façonnage sur toute la largeur du canal de distribution.

Afin d'améliorer l'efficacité énergétique du procédé, on utilise la chaleur résiduelle pour le préchauffage du premier comburant, et le cas échéant également du premier combustible, en amont de la chambre de fusion.

Ainsi, suivant l'invention, on introduit au moins une partie du premier flux de fumées chaudes évacué de la chambre de fusion dans un premier échangeur de chaleur pour le chauffage d'un oxydant intermédiaire ayant une teneur en oxygène entre 18%vol et 50%vol, de préférence entre 20% et 40%vol et encore de préférence entre 20%vol et 28%vol à l'intérieur du premier échangeur par échange thermique avec la au moins une partie du premier flux de fumées chaudes, de manière à générer un flux d'oxydant intermédiaire chaud et un premier flux de fumées tempérées. On introduit alors au moins une partie du flux d'oxydant intermédiaire chaud dans un deuxième échangeur de chaleur pour le chauffage d'un oxydant riche, à l'intérieur du deuxième échangeur, par échange thermique avec la au moins une partie du flux d'oxydant intermédiaire chaud, de manière à générer un flux d'oxydant riche préchauffé et un flux d'oxydant intermédiaire tempéré. Cet oxydant riche a une teneur en oxygène entre 80%vol et 100%vol. Au moins une partie de l'oxydant riche préchauffé est introduit dans la chambre de fusion comme premier comburant. Ainsi, de la chaleur résiduelle des fumées chaudes évacuées de la chambre de fusion est récupérée et utilisée pour améliorer le rendement énergétique de la chambre de fusion.

Comme indiqué ci-dessus, on préchauffe avantageusement également le premier combustible par échange thermique avec une portion de l'oxydant intermédiaire chaud dans un échangeur de chaleur dit échangeur de combustible.

Une telle méthode pour la récupération et l'exploitation de la chaleur résiduelle présente dans les fumées chaudes évacuées de la chambre de fusion est décrite dans EP-A-0872690 et WO2006/054015.

En pratique, seulement une partie de la chaleur présente dans l'oxydant intermédiaire à la sortie du premier échangeur de chaleur est absorbée par l'oxydant riche dans le deuxième échangeur ainsi que, le cas échéant, par le premier combustible dans l'échangeur de combustible, une deuxième partie non-négligeable de cette chaleur est évacuée du deuxième échangeur de chaleur par l'oxydant intermédiaire tempéré dont la température est nettement au-dessus de la température ambiante.

Suivant l'invention, cette deuxième partie est utilisée pour améliorer le rendement énergétique du canal de distribution du fait qu'au moins une partie de l'oxydant intermédiaire tempéré est introduite dans le canal de distribution comme deuxième comburant.

Ainsi, en faisant abstraction des pertes de chaleur, à priori faibles, lors du transport du combustible riche du deuxième échangeur vers la chambre de fusion et lors du transport de l'oxydant intermédiaire entre le premier et le deuxième échangeur et du deuxième échangeur vers le canal de distribution, il est possible d'utiliser la totalité de l'énergie résiduelle absorbée par l'oxydant intermédiaire dans le premier échangeur de chaleur pour l'amélioration de l'efficacité énergétique du procédé :
(a) d'une part, pour le préchauffage du premier comburant (et le cas échéant également du premier combustible), et
(b) d'autre part, par l'utilisation de l'oxydant intermédiaire tempéré comme deuxième comburant dans le canal de distribution,
rendant ainsi l'énergie qui normalement serait utilisée pour le chauffage desdits réactifs à l'intérieur de la chambre de fusion/du canal de distribution directement disponible pour le chauffage de la matière vitrifiable/du verre fondu.

En général, le premier comburant consistera en au moins une partie du flux d'oxydant riche chaud et le deuxième comburant consistera en au moins une partie du flux de l'oxydant intermédiaire tempéré. Toutefois, le premier comburant peut également consister en un mélange comportant au moins une partie du flux d'oxydant riche chaud et/ ou le deuxième comburant peut consister en un mélange comportant au moins une partie du ou des flux d'oxydant intermédiaire tempéré. Dans ce dernier cas, la teneur en oxygène du premier comburant peut être différente de la teneur en oxygène de l'oxydant riche et/ou la teneur en oxygène du deuxième comburant peut être différente de celle de l'oxydant intermédiaire.

La méthode suivant la présente invention peut, de manière utile être combinée avec les méthodes décrites dans les demandes non-publiées n°FR 1363459 et n°FR 1363477 de la demanderesse pour la fusion de matières vitrifiable dans une chambre de fusion.

Dans le présent contexte, le terme « chambre de fusion » désigne à la fois une chambre de fusion sans zone d'affinage et une chambre de fusion-affinage, c'est-à-dire une chambre de fusion comportant une zone d'affinage en aval de la zone de fusion.

Par « chaleur résiduelle », on comprend la chaleur qui est évacuée d'une chambre de combustion, telle qu'une chambre de fusion équipée de brûleurs, avec les fumées générées par la combustion dans la chambre.

Par « échangeur de chaleur » ou « échangeur », on comprend une installation ou un dispositif dans lequel deux fluides de températures différentes circulent dans des enceintes distinctes et transmettent de la chaleur de l'une des deux fluides (fluide la plus chaude) à l'autre des deux fluides (fluide la moins chaude) à travers une ou des parois séparant les deux enceintes donc sans contact direct ou mélange entre les deux fluides.

Le premier combustible peut être soit identique, soit différent du deuxième combustible, le gaz naturel étant un combustible préféré, à la fois pour la chambre de fusion et pour le canal de distribution.

Suivant l'invention, on préchauffe avantageusement également le deuxième combustible par échange thermique avec une portion de l'oxydant intermédiaire chaud dans un échangeur de chaleur dit échangeur de combustible. Ainsi, il est possible de préchauffer le premier combustible par échange thermique avec une première portion de l'oxydant intermédiaire chaud dans un premier échangeur de combustible et de préchauffer le deuxième combustible par échange thermique avec une deuxième portion de l'oxydant intermédiaire chaud dans un deuxième échangeur de combustible. Il est également possible de préchauffer le premier et le deuxième comburant avec une même portion de l'oxydant intermédiaire chaud dans un même échangeur de combustible, notamment quand le premier et le deuxième combustible sont identiques.

L'oxydant intermédiaire est avantageusement de l'air, le cas échéant enrichi en oxygène (par exemple un mélange d'air et oxygène) ou appauvri en oxygène (par exemple un mélange d'air et de fumées).

Suivant une forme de réalisation, la température Tpf du premier flux de fumées chaudes à la sortie de la chambre de fusion est entre 1000°C et 1600°C. De manière avantageuse, au moins une partie, voire la totalité, du premier flux de fumées chaudes évacuées de la chambre de fusion est utilisée pour chauffer l'oxydant intermédiaire dans le premier échangeur à une température Toi entre 600°C et 900°C. Au moyen d'une partie, voire de la totalité du flux d'oxydant intermédiaire chaud issu du premier échangeur, on préchauffe de l'oxydant riche à l'intérieur du deuxième échangeur de manière à ce que le flux d'oxydant riche chaud présente une température à la sortie du deuxième échangeur entre 400°C et 650°C.

Le procédé suivant l'invention est avantageusement mis en oeuvre de manière à ce que le flux d'oxydant intermédiaire tempéré présente une température à la sortie du deuxième échangeur entre 350°C et 650°C, la chaleur présente dans le flux d'oxydant intermédiaire tempéré étant ensuite exploité dans le canal de distribution.

Comme indiqué ci-dessus, au moins une partie, voire la totalité, de l'oxydant riche chaud est utilisée comme premier comburant (préchauffé) dans la chambre de fusion et au moins une partie, voire la totalité, de l'oxydant intermédiaire tempéré est utilisée comme deuxième comburant dans le canal de distribution.

Il est utile de veiller à limiter les pertes de chaleur lors du transport desdits oxydants vers respectivement la chambre de fusion et le canal de distribution.

Suivant une forme de réalisation, l'oxydant intermédiaire a une teneur en oxygène supérieure à 21%vol. Dans ce cas, l'oxydant intermédiaire est typiquement de l'air enrichi en oxygène. Par exemple, l'oxydant intermédiaire peut présenter une teneur en oxygène entre 21%vol et 40%vol, de préférence supérieure à 21%vol et inférieure ou égale à 40%vol. L'oxydant intermédiaire présente avantageusement une teneur en oxygène qui n'est pas supérieure à 50%vol.

La teneur en oxygène de l'oxydant intermédiaire peut également être inférieure à 21%. Dans ce cas, sa teneur en oxygène sera toutefois pas trop inférieure à celle de l'air. Ainsi, la teneur en oxygène de l'oxydant intermédiaire est de préférence au moins 18%vol, encore de préférence au moins 20%vol.

Le premier comburant, qui est plus riche en oxygène que le deuxième comburant, présente avantageusement une haute teneur en oxygène. Ainsi, le premier comburant présente avantageusement une teneur en oxygène entre 85%vol et 100%vol, encore de préférence entre 90%vol en 100%vol. En effet, l'utilisation d'un tel comburant riche en oxygène permet une grande intensité de chauffe de la matière vitrifiable et donc une fusion rapide. Elle permet également de réduire fortement la formation de NOx.

Etant donné les températures plus basses dans le canal de distribution, la formation de NOx dans le canal de distribution reste relativement faible, même avec un (second) comburant ayant une teneur significative en azote, comme par exemple l'air.

De manière utile, l'oxydant riche est fourni par un pipeline d'oxydant riche, une unité de séparation des gaz de l'air ou un réservoir d'oxydant riche. L'oxydant intermédiaire est typiquement fourni par un compresseur d'air.

Pour le préchauffage du premier combustible, on peut prendre une portion (première portion) du flux d'oxydant intermédiaire chaud et l'introduire dans un troisième échangeur de chaleur (échangeur de combustible) pour le chauffage du premier comburant, dans cet échangeur de combustible, par échange thermique avec la première portion du flux d'oxydant intermédiaire chaud, de manière à générer un flux de premier combustible préchauffé et un deuxième flux d'oxydant intermédiaire tempéré. On introduit ensuite le premier combustible préchauffé dans la chambre de fusion. De préférence, on introduit au moins une partie du deuxième flux de l'oxydant intermédiaire tempéré comme deuxième comburant dans le canal de distribution. Ce même échangeur de combustible peut également être utilisé pour le préchauffage au moyen de cette première portion du flux d'oxydant intermédiaire chaud du deuxième combustible en amont du canal de distribution.

Il est également possible de prendre une autre portion (deuxième portion) du flux d'oxydant intermédiaire chaud et l'introduire dans un quatrième échangeur de chaleur (deuxième échangeur de combustible) pour le chauffage du deuxième combustible dans le deuxième échangeur de combustible par échange thermique avec cette deuxième portion du flux d'oxydant intermédiaire, de manière à générer un flux de deuxième combustible préchauffé et un troisième flux d'oxydant intermédiaire tempéré. On introduit ensuite le deuxième combustible préchauffé dans le canal de distribution. De préférence, on introduit au moins une partie du troisième flux de l'oxydant intermédiaire tempéré comme deuxième comburant dans le canal de distribution.

Des installations de formage pouvant être mise en oeuvre dans le procédé suivant l'invention peuvent par exemple être sélectionnées parmi les installations de soufflage, de moulage, de pressage, de filage, de l'étirage, ou encore une installation combinant au moins deux de ces méthodes de formage, comme par exemple, les installations de soufflage/pressage.

Le procédé suivant l'invention est particulièrement utile pour la fabrication des ouvrages en verre sélectionnés parmi les fils de verre, les fibres de verre, comme notamment les fibres de renforcement ou d'isolation, le verre creux, comme les bouteilles, les flacons, les containeurs, l'art de la table, le verre technique, le verre laminé, le verre optique, le verre pharmaceutique, le verre d'éclairage, comme les ampoules ou tubes d'éclairage, et les pièces d'art en verre.

Le procédé peut être mise en oeuvre avec différentes compositions de verre, comme notamment le verre sodo-calcique, le boro-silicate, le verre céramique et le verre au plomb.

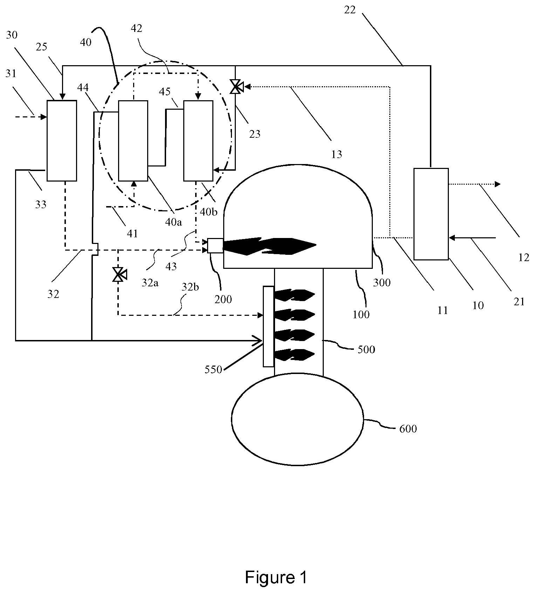

La présente invention et ses avantages seront mieux compris à la lumière de l'exemple ci-après, référence étant faite à la figure 1 qui est une représentation schématique d'une forme de réalisation particulière d'une installation adaptée pour la mise en oeuvre d'un procédé suivant l'invention.

Dans le présent exemple, le procédé suivant l'invention est plus particulièrement combiné avec le procédé décrit dans la demande de brevet co-existante non publiée n°FR 1363477 de la demanderesse. Ledit procédé permet de limiter les coûts des équipements utilisés pour le préchauffage de comburant par l'utilisation d'un premier échangeur pour le chauffage d'un oxydant riche en oxygène, suivi d'un deuxième échangeur pour le préchauffage du comburant, ledit comburant étant obtenu en mélangeant l'oxydant chauffé dans le premier échangeur avec de l'air et/ou avec un gaz majoritairement inerte en amont du deuxième échangeur.

L'installation montrée dans la figure 1 comporte une chambre de fusion de verre 100, équipée de brûleurs 200 pour la combustion d'un premier combustible, tel que le gaz naturel avec un premier comburant riche en oxygène. Bien qu'un seul brûleur 200 soit montré dans la figure 1, une telle chambre de fusion 100 comporte généralement plusieurs brûleurs 200. Cette combustion génère de la chaleur et des fumées. La chaleur générée par cette combustion est utilisée pour la fusion de matière vitrifiable dans la chambre 100. Les fumées sont évacuées de la chambre par une sortie de fumées 300. Les fumées évacuées 11 sont chaudes (typiquement de l'ordre de 1200°C à 1600°C) et contiennent une quantité non-négligeable de chaleur résiduelle.

Au moins une partie des fumées chaudes évacuées 11 sont introduites dans un premier échangeur 10 dans lequel circule de l'air 21 utilisé comme oxydant intermédiaire.

Dans le premier échangeur 10, l'oxydant (air) intermédiaire 21 est chauffé par échange thermique avec les fumées chaudes 11. On obtient ainsi de l'oxydant (air) intermédiaire chaud 22, typiquement à une température de 600°C à 900°C et des fumées tempérées 12.

Une première partie 23 de l'oxydant intermédiaire chaud est introduite dans un deuxième échangeur 40. Dans l'installation illustrée dans la figure 1, le deuxième échangeur 40 comporte deux parties en série 40a, 40b.

L'oxydant intermédiaire chaud 23 est introduit dans la partie 40b, dite deuxième partie, et sort de la deuxième partie 40b à l'état partiellement tempéré. L'oxydant intermédiaire partiellement tempéré 45 passe ensuite dans la première partie 40a.

L'oxydant riche à chauffer 41 est d'abord introduit dans la première partie 40a et subit un premier chauffage (chauffage partiel) par échange thermique avec l'oxydant intermédiaire partiellement tempéré 45. L'oxydant riche partiellement chauffé 42 passe ensuite dans la deuxième partie 40b pour son préchauffage final. On obtient ainsi un flux d'oxydant riche chaud 43 et de l'oxydant intermédiaire tempéré 44.

L'oxydant riche chaud 43 est fourni à au moins un des brûleurs 200 de la chambre de combustion 100, et de préférence à l'ensemble des brûleurs 200 de la chambre 100 en tant que deuxième comburant ou partie du deuxième comburant.

Dans la figure 1, un seul deuxième échangeur 40 est montré. Toutefois, l'installation peut comporter plusieurs deuxièmes échangeurs 40. Dans ce cas, chaque deuxième échangeur 40 alimente de préférence un nombre limité de brûleurs 200 en oxydant riche chaud, par exemple : un deuxième échangeur 40 par brûleur 200 de la chambre 100 utilisant de l'oxydant riche chaud 43.

De manière analogue, dans le cas d'un deuxième échangeur 40 en deux parties 40a, 40b, comme illustré dans la figure 1, l'installation peut comporter plusieurs deuxièmes parties 40b. Dans ce cas, chaque deuxième partie 40b alimente de préférence un nombre limité de brûleurs 200 en oxydant riche chaud, par exemple : une deuxième partie 40b par brûleur 200 de la chambre 100 utilisant de l'oxydant riche chaud 43.

Le deuxième échangeur 40 peut également consister en une seule partie pour le préchauffage de l'oxydant riche 41 par échange thermique avec la partie 23 de l'oxydant intermédiaire chaud 22.

Il est possible d'augmenter la chaleur fournie à l'échangeur principal 40 en remplaçant de l'air auxiliaire chaud comme oxydant intermédiaire chaud 23 par un mélange d'air auxiliaire chaud avec des fumées évacuées chaudes. A cette fin, une partie 13 du premier flux de fumées chaudes évacuées n'est pas introduite dans l'échangeur auxiliaire 10 pour le chauffage de l'oxydant intermédiaire 21. Cette partie 13 des fumées chaudes évacuées est au contraire mélangée avec l'air auxiliaire chaud 22 (ou uniquement avec la partie de l'air auxiliaire chaud qui est introduite dans l'échangeur principal 40 pour le préchauffage de l'oxydant riche 41).

Une autre portion 25 de l'oxydant intermédiaire chaud 22 est utilisée pour le préchauffage d'un combustible 31, par exemple du gaz naturel, dans un échangeur de chaleur 30 dit échangeur de combustible. On obtient ainsi un flux de combustible préchauffé 32 et un deuxième flux d'oxydant intermédiaire tempéré 33.

Au moins une partie 32a du combustible préchauffé 32 est fournie comme premier comburant aux brûleurs 200 de la chambre de fusion 100.

Le verre fondu produit dans la chambre de fusion 100 est amené vers une installation de mise en forme 600 au moyen d'un canal de distribution 500 dans lequel le verre fondu est amené de manière contrôlée vers la température de façonnage.

A cette fin, le canal de distribution 500 comporte un jeu de brûleurs 550 qui s'étend le long du canal de distribution 500. Un seul jeu de brûleurs 550 est montré dans la figure 1, bien que le plus souvent, le canal de distribution comporte un tel jeu de brûleurs 550 de chaque coté latéral du canal 500.

Suivant l'invention, au moins une partie de l'oxydant intermédiaire tempéré 44 issu du deuxième échangeur 40 est fournie comme deuxième comburant au(x) jeu(x) de brûleurs 550 du canal de distribution 500. Cet oxydant intermédiaire tempéré 44 contient encore une partie de la chaleur résiduelle des fumées chaudes 11 et présente donc une température nettement au-dessus de la température ambiante. Quand l'installation comporte également un échangeur de combustible 30, on fournit de préférence également au moins une partie de l'oxydant intermédiaire tempéré 33 issu de l'échangeur de combustible 30 comme deuxième comburant au(x) jeu(x) de brûleurs 550 du canal de distribution 500.

Dans la forme de réalisation illustrée, un même comburant est utilisé dans la chambre de fusion 100 (premier combustible) et dans le canal de distribution 500 (deuxième comburant) ; une partie 32b du combustible préchauffé 32 est fournie en tant que deuxième comburant au canal de distribution 500.

L'utilisation de l'oxydant intermédiaire tempéré 44, 33, par exemple de l'air tempéré, comme deuxième comburant pour le chauffage du canal de distribution 500 permet de réaliser une température de façonnage quasi uniforme tout en bénéficiant d'une partie de l'énergie résiduelle des fumées 11 issues de la chambre de fusion.

## Revendications

1. Procédé de fabrication d'ouvrages de verre, dans lequel :
a. on fond de la matière vitrifiable dans une chambre de fusion (100), avec obtention de verre fondu,
b. on transporte le verre fondu de la chambre de fusion (100) vers une installation de formage (600) au moyen d'un canal de distribution (500),
c. on réalise la mise en forme d'ouvrages de verre dans l'installation de formage (600) à partir du verre fondu issu du canal de distribution (500),
et dans lequel :
d. on brûle un premier combustible avec un premier comburant dans la chambre de fusion (100) de manière à générer, dans la chambre de fusion (100), de la chaleur et un premier flux de fumées chaudes (11) qui est évacué de la chambre de fusion (100),
e. on brûle un deuxième combustible avec un deuxième comburant dans le canal de distribution (500) de manière à générer, dans le canal de distribution (500), de la chaleur et un deuxième flux de fumées,
ledit procédé étant **caractérisé en ce que** :
f. on introduit au moins une partie du premier flux de fumées chaudes (11) évacué de la chambre de fusion (100) dans un premier échangeur de chaleur (10) pour le chauffage, à l'intérieur du premier échangeur (10), d'un oxydant intermédiaire (21) ayant une teneur en oxygène entre 18%vol et 50%vol, de préférence entre 20% et 40%vol et encore de préférence entre 20%vol et 28%vol, par échange thermique avec la au moins une partie du premier flux de fumées chaudes (11), de manière à générer un flux d'oxydant intermédiaire chaud (22) et un premier flux de fumées tempérées (12),
g. on introduit au moins une partie (23) du flux d'oxydant intermédiaire chaud (22) dans un deuxième échangeur de chaleur (40) pour le chauffage d'un oxydant riche (41), ayant une teneur en oxygène entre 80%vol et 100%vol et supérieure à la teneur en oxygène de l'oxydant intermédiaire (21), à l'intérieur du deuxième échangeur (40), par échange thermique avec la au moins une partie (23) du flux d'oxydant intermédiaire chaud (22), de manière à générer un flux d'oxydant riche préchauffé (43) et un flux d'oxydant intermédiaire tempéré (44),
h. on introduit au moins une partie de l'oxydant riche préchauffé (43) comme premier comburant dans la chambre de fusion (100) et
i. on introduit au moins une partie de l'oxydant intermédiaire tempéré (44) comme deuxième comburant dans le canal de distribution (500).

2. Procédé suivant la revendication 1, dans lequel la température Tpf du premier flux de fumées chaudes (11) à la sortie de la chambre de fusion (100) est entre 1000°C et 1600°C

3. Procédé suivant l'une quelconque des revendications précédentes, dans lequel l'oxydant intermédiaire (21) est chauffé dans le premier échangeur (10) à une température Toi entre 600°C et 900°C.

4. Procédé suivant l'une quelconque des revendications précédentes, dans lequel le flux d'oxydant riche préchauffé (43) présente une température à la sortie du deuxième échangeur (40) entre 400°C et 650°C.

5. Procédé suivant l'une quelconque des revendications précédentes, dans lequel le flux d'oxydant intermédiaire tempéré (44) présente une température à la sortie du deuxième échangeur (40) entre 350°C et 650°C.

6. Procédé suivant l'une quelconque des revendications précédentes, dans lequel l'oxydant intermédiaire (21) a une teneur en oxygène supérieure à 21%vol.

7. Procédé suivant l'une quelconque des revendications précédentes, dans lequel le deuxième comburant présente une teneur en oxygène entre 21%vol et 40%vol, de préférence supérieure à 21%vol et inférieure ou égale à 40%vol.

8. Procédé suivant l'une des revendications précédentes, dans lequel le premier comburant présente une teneur en oxygène entre 85%vol et 100%vol, encore de préférence entre 90%vol et 100%vol.

9. Procédé suivant l'une quelconque des revendications précédentes, dans lequel :
a. on introduit une portion (25) du flux d'oxydant intermédiaire chaud (22) dans un troisième échangeur de chaleur (30) pour le chauffage du premier combustible (31), dans le troisième échangeur (30), par échange thermique avec la portion (25) du flux d'oxydant intermédiaire chaud (22), de manière à générer un flux de premier combustible préchauffé (32a) et un deuxième flux d'oxydant intermédiaire tempéré (33),
b. on introduit le premier combustible préchauffé dans le a chambre de fusion (100) et
c. on introduit, de préférence, également au moins une partie du deuxième flux de l'oxydant intermédiaire tempéré (33) comme deuxième comburant dans le canal de distribution (500).

10. Procédé suivant l'une quelconque des revendications précédentes, dans lequel l'oxydant riche est fourni par un pipeline d'oxydant riche, une unité de séparation des gaz de l'air ou un réservoir d'oxydant riche.

11. Procédé suivant l'une quelconque des revendications précédentes, dans lequel l'installation de formage (600) est sélectionnée parmi les installations de soufflage, les installations de moulage, les installations de pressage, les installations de filage, les installations de l'étirage, ou encore les installations combinant au moins deux de ces méthodes de formage.

12. Procédé suivant l'une quelconque des revendications précédentes, dans lequel les ouvrages en verre sont sélectionnés parmi les fils de verre, les fibres de verre, le verre creux, l'art de la table, le verre technique, le verre laminé, le verre optique, le verre pharmaceutique, le verre d'éclairage, le verre artistique.

## Patentansprüche

1. Verfahren zur Herstellung von Glaselementen, wobei:
a. in einer Schmelzkammer (100) verglasbares Material geschmolzen wird, unter Erhalt von geschmolzenem Glas,
b. das geschmolzene Glas von der Schmelzkammer (100) über einen Verteilerkanal (500) zu einer Formanlage (600) transportiert wird,
c. die Formgebung der Glaselemente in der Formanlage (600) aus dem geschmolzenen Glas aus dem Verteilerkanal (500) erfolgt,
und wobei:
d. ein erster Brennstoff mit einem ersten Oxidationsmittel in der Schmelzkammer (100) verbrannt wird, um in der Schmelzkammer (100) Wärme und einen ersten Fluss von heißem Rauch (11), der aus der Schmelzkammer (100) abgeführt wird, zu erzeugen,
e. ein zweiter Brennstoff mit einem zweiten Oxidationsmittel im Verteilerkanal (500) verbrannt wird, um Wärme und einen zweiten Rauchfluss im Verteilerkanal (500) zu erzeugen,
wobei das Verfahren **dadurch gekennzeichnet ist, dass**:
f. mindestens ein Teil des ersten aus der Schmelzkammer (100) abgeführten Flusses von heißem Rauch (11) in einen ersten Wärmeaustauscher (10) eingeleitet wird, zur Erwärmung, innerhalb des ersten Wärmeaustauschers (10), eines Zwischenoxidationsmittels (21) mit einem Sauerstoffgehalt zwischen 18Vol.-% und 50Vol.-%, vorzugsweise zwischen 20Vol.-% und 40Vol.-% und noch bevorzugter zwischen 20Vol.-% und 28Vol.-%, durch Wärmeaustausch mit mindestens einem Teil des ersten Flusses von heißem Rauch (11), um einen Fluss von heißem Zwischenoxidationsmittel (22) und einen ersten Fluss von temperiertem Rauch (12) zu erzeugen,
g. mindestens ein Teil (23) des Flusses von heißem Zwischenoxidationsmittel (22) in einen zweiten Wärmeaustauscher (40) zur Erwärmung eines reichen Oxidationsmittels (41) eingeleitet wird, das einen Sauerstoffgehalt zwischen 80Vol.-% und 100 Vol.-% und höher als der Sauerstoffgehalt des Zwischenoxidationsmittels (21) aufweist, innerhalb des zweiten Austauschers (40), durch Wärmeaustausch mit dem mindestens einen Teil (23) des Flusses von heißem Zwischenoxidationsmittel (22), um einen Fluss von vorgewärmtem, reichen Oxidationsmittel (43) und einen Fluss von temperiertem Zwischenoxidationsmittel (44) zu erzeugen,
h. mindestens ein Teil des vorgewärmten, reichen Oxidationsmittels (43) als erstes Oxidationsmittel in die Schmelzkammer (100) eingeleitet wird und
i. mindestens ein Teil des temperierten Zwischenoxidationsmittels (44) als zweites Oxidationsmittel in den Verteilerkanal (500) eingeleitet wird.

2. Verfahren nach Anspruch 1, wobei die Temperatur Tpf des ersten Flusses von heißem Rauch (11) am Ausgang der Schmelzkammer (100) zwischen 1000°C und 1600°C beträgt.

3. Verfahren nach einem der vorstehenden Ansprüche, wobei das Zwischenoxidationsmittel (21) im ersten Austauscher (10) auf eine Temperatur Toi zwischen 600°C und 900°C erwärmt wird.

4. Verfahren nach einem der vorstehenden Ansprüche, wobei der Fluss von vorgewärmtem, reichen Oxidationsmittel (43) am Ausgang des zweiten Austauschers (40) eine Temperatur zwischen 400°C und 650°C aufweist.

5. Verfahren nach einem der vorstehenden Ansprüche, wobei der Fluss von temperiertem Zwischenoxidationsmittel (44) am Ausgang des zweiten Austauschers (40) eine Temperatur zwischen 350°C und 650°C aufweist.

6. Verfahren nach einem der vorstehenden Ansprüche, wobei das Zwischenoxidationsmittel (21) einen Sauerstoffgehalt von mehr als 21Vol.-% aufweist.

7. Verfahren nach einem der vorstehenden Ansprüche, wobei das zweite Oxidationsmittel einen Sauerstoffgehalt zwischen 21Vol.-% und 40Vol.-%, vorzugsweise mehr als 21Vol.-% und weniger als oder gleich 40Vol.-% aufweist.

8. Verfahren nach einem der vorstehenden Ansprüche, wobei das erste Oxidationsmittel einen Sauerstoffgehalt zwischen 85Vol.-% und 100Vol.-%, noch vorzugsweise zwischen 90Vol.-% und 100Vol.-% aufweist.

9. Verfahren nach einem der vorstehenden Ansprüche, wobei:
a. ein Teil (25) des Flusses von heißem Zwischenoxidationsmittel (22) in einen dritten Wärmeaustauscher (30) zur Erwärmung des ersten Brennstoffs (31), im dritten Austauscher (30), durch Wärmeaustausch mit dem Teil (25) des Flusses von heißem Zwischenoxidationsmittel (22) eingeleitet wird, um einen Fluss von erstem vorgewärmten Brennstoff (32a) und einen zweiten Fluss von temperiertem Zwischenoxidationsmittel (33) zu erzeugen,
b. der erste vorgewärmte Brennstoff in die Schmelzkammer (100) eingeleitet wird und
c. vorzugsweise auch mindestens ein Teil des zweiten Flusses von temperiertem Zwischenoxidationsmittel (33) als zweites Oxidationsmittel in den Verteilerkanal (500) eingeleitet wird.

10. Verfahren nach einem der vorstehenden Ansprüche, wobei das reiche Oxidationsmittel durch eine Leitung mit reichem Oxidationsmittel, eine Luftabscheidungseinheit oder einen Behälter mit reichem Oxidationsmittel bereitgestellt wird.

11. Verfahren nach einem der vorstehenden Ansprüche, wobei die Formanlage (600) ausgewählt ist aus Blasformanlagen, Gießformanlagen, Pressenanlagen, Spinnanlagen, Reckanlagen oder solchen Anlagen, die mindestens zwei dieser Formgebungsverfahren kombinieren.

12. Verfahren nach einem der vorstehenden Ansprüche, wobei die Glaselemente ausgewählt sind aus Glasgarnen, Glasfasern, Hohlglas, Geschirr, technischem Glas, Verbundglas, optischem Glas, pharmazeutischem Glas, Beleuchtungsglas, Kunstglas.

## Claims

1. Method for producing glass elements, wherein:
a. batch material is melted in a melting chamber (100), to obtain molten glass,
b. the molten glass is transported from the melting chamber (100) to a forming unit (600) by means of a distribution duct (500),
c. glass elements are shaped in the forming unit (600) from the molten glass coming from the distribution duct (500),
and wherein:
d. a first fuel is burnt with a first oxidant in the melting chamber (100) so as to generate, in the melting chamber (100), heat and a first flow of hot fumes (11) that is evacuated from the melting chamber (100),
e. a second fuel is then burnt with a second oxidant in the distribution duct (500) so as to generate, in the distribution duct (500), heat and a second flow of fumes,
said method being **characterised in that**:
f. at least one part of the first flow of hot fumes (11) evacuated from the melting chamber (100) is introduced in a first heat exchanger (10) for the heating, inside the first exchanger (10), of a first intermediate oxidiser (21) having an oxygen content of 18%vol to 50%vol, preferably of 20%vol to 40%vol and more preferably of 20%vol to 28%vol, by heat exchange with the at least one part of the first flow of hot fumes (11), so as to generate a hot intermediate oxidiser flow (22) and a first flow of temperate fumes (12),
g. at least one part (23) of the hot intermediate oxidiser flow (22) is introduced in a second heat exchanger (40) for the heating of a rich oxidiser (41) having an oxygen content of 80%vol to 100%vol that is greater than the oxygen content of the intermediate oxidiser (21) inside the second exchanger (40) by heat exchange with the at least one part (23) of the hot intermediate oxidiser flow (22), so as to generate a preheated rich oxidiser flow (43) and a temperate intermediate oxidiser flow (44),
h. at least one part of the preheated rich oxidiser (43) is introduced as a first oxidant in the melting chamber (100), and
i. at least one part of the temperate intermediate oxidiser (44) is introduced as a second oxidant in the distribution duct (500).

2. Method according to claim 1, wherein the temperature Tpf of the first flow of hot fumes (11) at the outlet of the melting chamber (100) is between 1000°C and 1600°C.

3. Method according to any one of the preceding claims, wherein the intermediate oxidiser (21) is heated in the first exchanger (10) at a temperature Toi between 600°C and 900°C.

4. Method according to any one of the preceding claims, wherein the preheated rich oxidiser flow (43) has a temperature at the outlet of the second exchanger (40) between 400°C and 650°C.

5. Method according to any one of the preceding claims, wherein the temperate intermediate oxidiser flow (44) has a temperature at the outlet of the second exchanger (40) between 350°C and 650°C.

6. Method according to any one of the preceding claims, wherein the intermediate oxidiser (21) has an oxygen content greater than 21%vol.

7. Method according to any one of the preceding claims, wherein the second oxidant has an oxygen content between 21%vol and 40%vol, preferably greater than 21%vol and less than or equal to 40%vol.

8. Method according to any one of the preceding claims, wherein the first oxidant has an oxygen content between 85%vol and 100%vol, preferably still from 90%vol to 100%vol.

9. Method according to any one of the preceding claims wherein:
a. a portion (25) of the hot intermediate oxidiser flow (22) is introduced in a third heat exchanger (30) for the heating of the first fuel (31) in the third exchanger (30), by heat exchange with the portion (25) of the hot intermediate oxidiser flow (22), so as to generate a flow of a first preheated fuel (32a) and a second temperate intermediate oxidiser flow (33),
b. the first preheated fuel is introduced in the melting chamber (100), and
c. preferably, at least one part of the second temperate intermediate oxidiser flow (33) is introduced as a second oxidant in the distribution duct (500).

10. Method according to any one of the preceding claims, wherein the rich oxidiser is provided through a rich oxidiser pipeline, a gas-air separation unit or a tank containing rich oxidiser.

11. Method according to any one of the preceding claims, wherein the forming unit (600) is selected from among blowing units, moulding units, press units, spinning units, stretching units or units that combine at least two of these forming methods.

12. Method according to any one of the preceding claims, wherein the glass elements are selected from among glass threads, glass fibres, hollow glass, tableware, technical glass, laminated glass, optical glass, pharmaceutical glass, lighting glass and works of art made of glass.
